# EUROPÄISCHE PATENTSCHRIFT

(11) **EP 3 546 271 B1**
(45) Veröffentlichungstag und Bekanntmachung des Hinweises auf die Patenterteilung: **03.06.2020**
(21) Anmeldenummer: 19163808.9
(22) Anmeldetag: 19.03.2019
(51) Int. Cl.: B60K 35/00, B60K 37/06, B62D 1/06

(54) **FAHRZEUGANZEIGE-STEUERVORRICHTUNG**
VEHICLE DISPLAY CONTROL DEVICE
DISPOSITIF DE COMMANDE FORMANT AFFICHAGE DE VÉHICULE

(30) Priorität: 26.03.2018 JP 2018058333
(43) Veröffentlichungstag der Anmeldung: 02.10.2019
(73) Patentinhaber: YAZAKI CORPORATION, Minato-ku, Tokyo 108-8333 (JP)
(72) Erfinder: SUGIMOTO, Terumitsu, Makinohara-shi, Shizuoka 421-0407 (JP)
(74) Vertreter: Grünecker Patent- und Rechtsanwälte PartG mbB

(56) Entgegenhaltungen:
- DE-A1- 19 901 896
- DE-A1-102017 205 307
- US-B1- 9 248 839

## Beschreibung

### TECHNISCHER BEREICH

Die vorliegende Anwendung bezieht sich auf eine Vorrichtung zum Steuern eines Anzeigemodus einer von einem Fahrer eines Fahrzeugs betriebenen Bedieneinheit.

### HINTERGRUND

In einem Fahrzeug sind verschiedene Eingabetasten vorgesehen, die von einem Insassen bedient werden. Um die Sichtbarkeit einer Eingabetaste durch den Insassen zu verbessern, leuchtet die Eingabetaste.

Die Anzahl und Art der am Fahrzeug vorhandenen Eingabetasten nimmt mit der Diversifizierung der im Fahrzeug installierten Geräte und Funktionen zu. Aus diesem Grund kann der Insasse nicht sofort erkennen, welche Eingabetaste betätigt werden soll, indem er lediglich die Sichtbarkeit durch Beleuchten der Eingabetaste erhöht.

Daher wurde eine Technik entwickelt, bei der je nach Nutzungsfrequenz einer Taste (Schalter) auf einem Bildschirm ein Anzeigemodus wie Größe und Helligkeit der Taste (siehe JP 2005-062978 A1) oder die Helligkeit einer Lichtquelle zum Beleuchten einer Bedienfläche der Eingabetaste von hinten verändert wird (siehe JP 2012-001128 A1).

Aus US 9,248,839 B1 ist bekannt, in Abhängigkeit von der Kontaktierung von Sensoren an einem Kraftfahrzeuglenkrad weitere Bedienungssensoren in dem Kraftfahrzeug zu aktivieren bzw. zu deaktivieren.

### ZUSAMMENFASSUNG

Da die Sichtbarkeit der Eingabetaste in Abhängigkeit von der Nutzungsfrequenz durch den Insassen eingestellt wird, ist die Sichtbarkeit der Eingabetaste bei der oben beschriebenen konventionellen Technik je nach Höhe der Nutzungsfrequenz unterschiedlich.

Die vorliegende Anwendung wurde unter Berücksichtigung der vorgenannten Umstände erstellt, und ein Ziel der vorliegenden Anwendung ist es, eine Fahrzeug-Steuervorrichtung bereitzustellen, die in der Lage ist, einen Anzeigemodus einer Betriebseinheit zu steuern, die von einem Fahrer eines Fahrzeugs zu einem anderen Zweck als dem Fahren bedient wird, so dass es leicht ist, zwischen einer Betriebseinheit, die von einer Hand bedient werden kann, mit der die Bedienung leichter durchgeführt wird, und einer Betriebseinheit, die dies nicht tut, zu unterscheiden.

Um das vorstehende Ziel zu erreichen, umfasst eine Fahrzeuganzeige-Steuervorrichtung gemäß einem Aspekt der vorliegenden Anwendung: eine Erfassungseinheit zum Erfassen eines Betriebszustands durch einen Fahrer einer Fahrbetriebseinheit, die zum Fahren eines Fahrzeugs betrieben wird, einzeln für eine rechte und eine linke Hand des Fahrers; eine rechte Steuereinheit, die in der Lage ist, eine rechte Bedieneinheit anzuzeigen, die mit der rechten Hand des Fahrers zu einem anderen Zweck als dem Fahren des Fahrzeugs in einem ersten Anzeigemodus betrieben wird, wenn sich der Betriebszustand durch die rechte Hand des von der Erfassungseinheit erfassten Fahrers in einem Betriebszustand befindet, und die rechte Bedieneinheit in einem zweiten Anzeigemodus anzuzeigen, der für den Fahrer sichtbarer ist als der erste Anzeigemodus, wenn sich der Betriebszustand durch die rechte Hand des von der Erfassungseinheit erfassten Fahrers in einem Nichtbetriebszustand befindet; und eine linke Steuereinheit, die in der Lage ist, eine linke Bedieneinheit anzuzeigen, die mit der linken Hand des Fahrers zu einem anderen Zweck als dem Fahren des Fahrzeugs in der ersten Anzeigeart betrieben wird, wenn sich der von der Erfassungseinheit erfasste Betriebszustand der linken Hand des Fahrers in einem Betriebszustand befindet, und die linke Bedieneinheit in der zweiten Anzeigeart anzuzeigen, wenn sich der Betriebszustand der von der Erfassungseinheit erfassten linken Hand des Fahrers in einem Nichtbetriebszustand befindet.

Somit kann der Fahrer bei Bedienung der Fahrbetriebseinheit mit der rechten Hand die rechte Bedieneinheit nicht mit der rechten Hand bedienen, es sei denn, der Betrieb der Fahrbetriebseinheit mit der rechten Hand wird gestoppt. Auch wenn die rechte Bedieneinheit in einem Anzeigemodus angezeigt wird, in dem sie optisch besser erkennbar ist, ist es zu diesem Zeitpunkt für den Fahrer nutzlos, die Fahrbedieneinheit mit der rechten Hand zu bedienen.

Ebenso kann der Fahrer bei Bedienung der Fahrbetriebseinheit mit der linken Hand die linke Bedieneinheit nicht mit der linken Hand bedienen, es sei denn, der Betrieb der Fahrbetriebseinheit mit der linken Hand wird gestoppt. Auch wenn die linke Bedieneinheit in einem Anzeigemodus angezeigt wird, in dem sie optisch leichter zu erkennen ist, ist es zu diesem Zeitpunkt für den Fahrer, der die Fahrbedieneinheit mit der linken Hand bedient, nutzlos.

Im Gegenteil, der Fahrer kann bei Nichtbedienung der Fahrbetriebseinheit mit der rechten Hand die rechte Bedieneinheit mit der rechten Hand bedienen. Wenn zu diesem Zeitpunkt die rechte Bedieneinheit in einem Anzeigemodus angezeigt wird, in dem sie optisch besser erkannt wird, kann der Fahrer die rechte Bedieneinheit leicht finden, wenn die rechte Bedieneinheit mit der rechten Hand bedient werden soll, was für den Fahrer bequem ist.

Ebenso kann der Fahrer, wenn er die Fahrbetriebseinheit nicht mit der linken Hand bedient, die linke Bedieneinheit mit der linken Hand bedienen. Wird die linke Bedieneinheit zu diesem Zeitpunkt in einem Anzeigemodus angezeigt, in dem sie optisch leichter zu erkennen ist, kann der Fahrer die linke Bedieneinheit leicht finden, wenn die linke Bedieneinheit mit der linken Hand bedient werden soll, was für den Fahrer bequem ist.

Aus diesem Grund, wenn der Fahrer die Fahrbetriebseinheit nicht mit der rechten oder linken Hand bedient, wird die rechte Bedieneinheit oder die linke Bedieneinheit in der zweiten Anzeigeart sichtbar höher angezeigt als in der ersten Anzeigeart, wenn der Fahrer die Fahrbetriebseinheit bedient, wobei der Anzeigemodus der vom Fahrer des Fahrzeugs zu einem anderen Zweck als dem Fahren betriebenen Bedieneinheit so gesteuert werden kann, dass es leicht ist, zwischen der Bedieneinheit, die von der Hand bedient werden kann, mit der die Bedienung leichter durchgeführt wird, und der Bedieneinheit, die dies nicht tut, zu unterscheiden.

Die Erfassungseinheit kann einen Greifsensor zum individuellen Erfassen eines Greifzustands durch den Fahrer eines Lenkrads als Fahrbedieneinheit bei Nichteinhaltung einer Rechts- oder Linkskurve, bei der ein Lenkwinkel kleiner oder gleich einem vorgegebenen Wert ist, umfassen, indem der Greifzustand in einen Greifzustand eines rechten Greifbereichs durch die rechte Hand und ein Greifzustand eines linken Greifbereichs durch die linke Hand unterteilt wird.

Wenn das Fahrzeug also keine Rechts- oder Linkskurve macht und der Lenkwinkel des Lenkrads kleiner oder gleich dem vorgegebenen Wert ist, wird der rechte Greifbereich des Lenkrads nicht von der linken Hand des Fahrers erfasst, und der linke Greifbereich wird nicht von der rechten Hand erfasst.

Aus diesem Grund, wenn der Lenkwinkel des Lenkrads kleiner oder gleich dem vorgegebenen Wert ist, wenn der rechte Greifbereich des Lenkrads nicht erfasst wird, hat der Fahrer die rechte Hand vom Lenkrad gelöst, und wenn der linke Greifbereich des Lenkrads nicht erfasst wird, hat der Fahrer die linke Hand vom Lenkrad gelöst.

Wenn der Lenkwinkel des Lenkrads kleiner oder gleich dem vorgegebenen Wert ist und der rechte Greifbereich des Lenkrads nicht erfasst wird, wird der Anzeigemodus der rechten Bedieneinheit daher von der ersten Anzeigeart in die zweite Anzeigeart geändert. Wenn also die Möglichkeit besteht, dass der Fahrer die rechte Bedieneinheit mit der rechten Hand bedient, kann die Sichtbarkeit der rechten Bedieneinheit verbessert werden.

Ebenso, wenn der Lenkwinkel des Lenkrads kleiner oder gleich dem vorgegebenen Wert ist, wird, wenn der linke Greifbereich des Lenkrads nicht erfasst wird, der Anzeigemodus der linken Bedieneinheit von der ersten Anzeigeart in die zweite Anzeigeart geändert. Wenn also die Möglichkeit besteht, dass der Fahrer die linke Bedieneinheit mit der linken Hand bedient, kann die Sichtbarkeit der linken Bedieneinheit verbessert werden.

Jede der rechten Bedieneinheiten und der linken Bedieneinheit kann eine Drucktaste umfassen, mit der der Fahrer einen Druckvorgang (eine Druckoperation) durchführt. In diesem Fall machen die rechte Steuereinheit und die linke Steuereinheit die Helligkeit der Beleuchtung durch eine Lichtquelle auf einer Bedienfläche der Drucktaste im zweiten Anzeigemodus stärker als im ersten Anzeigemodus.

Die Helligkeit der Bedienoberfläche der Drucktasten der rechten Bedieneinheit und der linken Bedieneinheit ist höher eingestellt, wenn die rechte Bedieneinheit und die linke Bedieneinheit jeweils mit der rechten und linken Hand bedient werden können, als wenn sie nicht bedient werden können, wodurch es möglich ist, nur die Drucktaste der Bedieneinheit, die vom Fahrer bedient werden kann, durch die Helligkeit seiner Anzeigefläche leicht zu unterscheiden.

Wenigstens eine Bedieneinheit der rechten Bedieneinheit und der linken Bedieneinheit kann eine Anzeigetaste umfassen, die selektiv auf einem Touchscreen angezeigt wird und mit der der Fahrer während der Anzeige eine Kontaktfunktion ausführt. In diesem Fall zeigt eine Steuereinheit, die der wenigstens einen Bedieneinheit der rechten Steuereinheit und der linken Steuereinheit entspricht, im ersten Anzeigemodus nicht die Anzeigetaste auf dem Touchpanel und im zweiten Anzeigemodus die Anzeigetaste auf dem Touchpanel an.

Nur wenn die rechte Bedieneinheit und die linke Bedieneinheit jeweils mit den Händen bedient werden können, mit denen die Bedienung leichter durchgeführt werden kann, erscheint die Anzeigetaste der mit der Hand bedienbaren Bedieneinheit, mit der die Bedienung leichter durchgeführt werden kann. Wenn es nicht möglich ist, mit der Hand zu arbeiten, mit der die Bedienung einfacher ist, wird die Anzeigetaste der Bedieneinheit nicht angezeigt, die nicht mit der Hand bedient werden kann, mit der die Bedienung einfacher ist. So ist es möglich, nur die Anzeigetaste der Bedieneinheit leicht zu finden, die vom Fahrer mit der Hand bedient werden kann und mit der die Bedienung einfacher ist.

Mit der Fahrzeuganzeige-Steuervorrichtung gemäß dem Aspekt der vorliegenden Anwendung kann der Anzeigemodus der vom Fahrer des Fahrzeugs für andere Zwecke als das Fahren betriebenen Bedieneinheit so gesteuert werden, dass es leicht ist, zwischen der Bedieneinheit, die von der Hand bedient werden kann, mit der die Bedienung leichter durchgeführt wird, und der Bedieneinheit, die dies nicht tut, zu unterscheiden.

### KURZE BESCHREIBUNG DER ZEICHNUNGEN

FIG. 1 ist ein erläuterndes Diagramm, das eine Anordnung von Tasten und dergleichen um eine Instrumententafel eines Fahrzeugs herum veranschaulicht, in dem die Anzeigemodi von einer Fahrzeuganzeige-Steuervorrichtung gemäß einer Ausführungsform gesteuert werden.
FIG. 2 ist ein erläuterndes Diagramm, das schematisch eine schematische Konfiguration der Anzeigesteuervorrichtung gemäß der in FIG. 1 dargestellten Ausführungsform zur Durchführung der Beleuchtungssteuerung und Anzeigesteuerung der Tasten und dergleichen darstellt.
FIG. 3 ist ein Flussdiagramm, das einen Ablauf der Beleuchtungssteuerung und der Anzeigesteuerung der Tasten und dergleichen von FIG. 1 veranschaulicht, der von einer CPU einer Steuerung von FIG. 2 gemäß einem in einem ROM gespeicherten Programm ausgeführt wird.

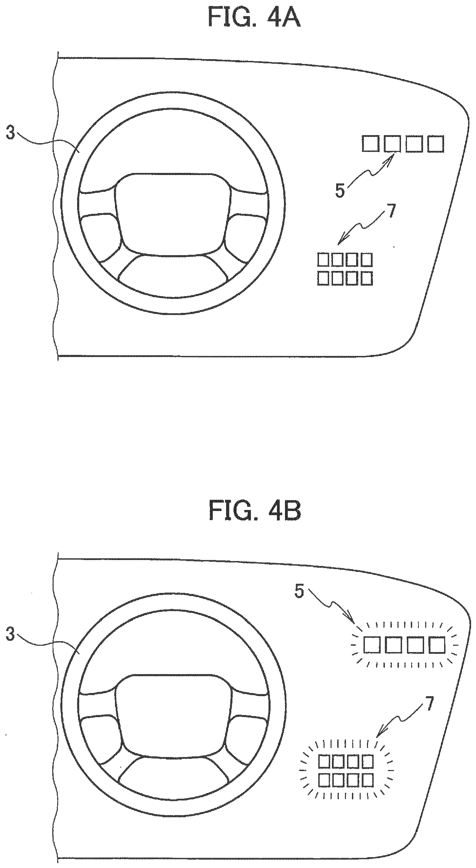

FIG. 4A ist ein erläuterndes Diagramm, das einen Anzeigemodus von Tasten veranschaulicht, die auf der rechten Seite eines Lenkrads angeordnet sind, wenn ein Rechte-Hand-Sensor von FIG. 2 das Greifen des Lenkrads in der Nähe einer Neutralstellung erkennt, und FIG. 4B ist ein erläuterndes Diagramm, das einen Anzeigemodus der auf der rechten Seite des Lenkrads angeordneten Tasten veranschaulicht, wenn der Rechte-Hand-Sensor von FIG. 2 das Greifen des Lenkrads in der Nähe der Neutralstellung nicht erkennt.

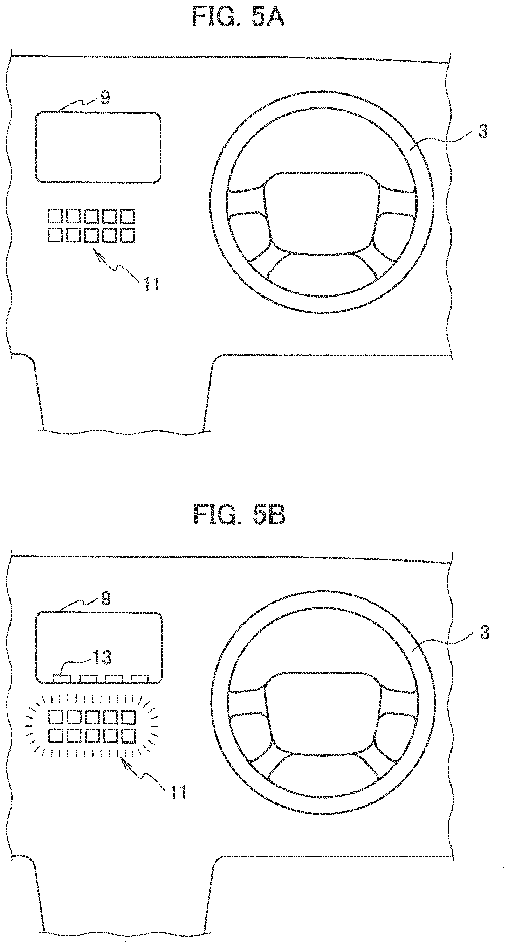

FIG. 5A ist ein erläuterndes Diagramm, das einen Anzeigemodus von Tasten und dergleichen veranschaulicht, die auf der linken Seite des Lenkrads angeordnet sind, wenn ein Linke-Hand-Sensor von FIG. 2 das Greifen des Lenkrads in der Nähe der Neutralstellung erkennt, und FIG. 5B ist ein erläuterndes Diagramm, das einen Anzeigemodus der Tasten und dergleichen auf der linken Seite des Lenkrads veranschaulicht, wenn der Linke-Hand-Sensor von FIG. 2 das Greifen des Lenkrads in der Nähe der Neutralstellung nicht erkennt.

### AUSFÜHRLICHE BESCHREIBUNG

Im Folgenden wird eine Fahrzeug-Steuervorrichtung gemäß einer Ausführungsform mit Bezug auf die Zeichnungen beschrieben.

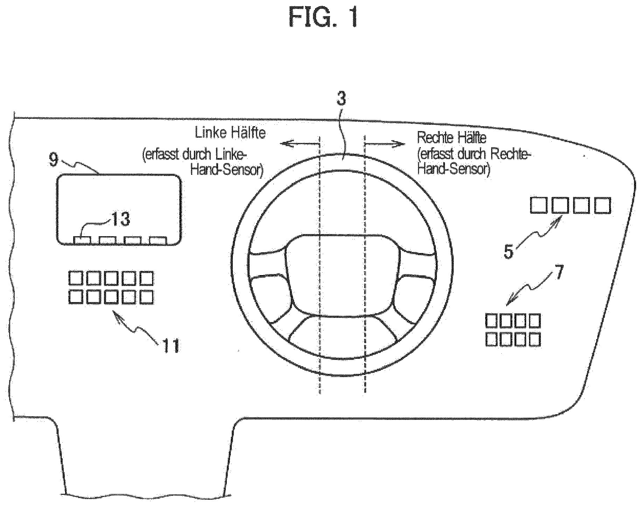

Wie in FIG. 1 dargestellt, sind auf einer Instrumententafel eines Fahrzeugs von einem Fahrer zu einem anderen Zweck als dem Fahren bedienbare Tasten und dergleichen auf der linken und rechten Seite eines Lenkrads (Fahrbetriebseinheit) 3 angeordnet. Man beachte, dass FIG.1 einen Fall eines rechtsgelenkten Fahrzeugs (ein Fahrzeug, dessen Fahrersitz ein rechter Vordersitz ist) veranschaulicht. Im Falle eines linksgelenkten Fahrzeugs (ein Fahrzeug, dessen Fahrersitz ein linker Vordersitz ist) wird somit die Anordnung der Tasten und dergleichen der linken und rechten Seite des Lenkrads 3 umgekehrt.

In dem in FIG. 1 dargestellten Fahrzeug sind beispielsweise auf der rechten Seite des Lenkrads 3 rechte Bedieneinheiten wie die Speichertasten 5 und 7 angeordnet.

Die Speichertasten 5 sind Tasten zum Ausführen von Operationen mit zuvor registrierten Funktionen bei Bedienung. Die Speichertasten 5 umfassen beispielsweise eine Sitztaste zum Zurücksetzen eines Sitzes und einer Rückenlehne eines Fahrersitzes in eine zuvor gespeicherte Fahrposition, eine Spiegeltaste zum Bewegen eines Innenspiegels und von Außenspiegeln in Spiegelflächenwinkel, die der Fahrposition entsprechen, und dergleichen.

Die Bedientasten 7 umfassen beispielsweise eine Motorstarttaste, eine Außenspiegel-Winkelverstellungstaste, eine Nebelscheinwerfer-Autobeleuchtungstaste, eine Antiblockiersystem-Ein/Aus-Taste und dergleichen.

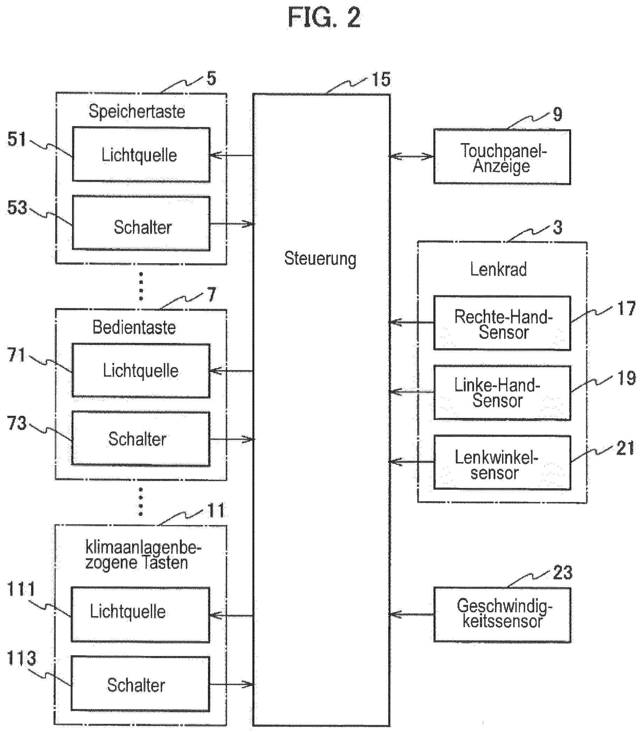

In der Ausführungsform sind die Speichertasten 5 und die Bedientasten 7 durch die Beleuchtung ihrer Bedienflächen durch Einschalten der eingebauten Lichtquellen 51, 71 leicht optisch zu erkennen (siehe FIG. 2).

In dem in FIG. 1 dargestellten Fahrzeug sind eine Touchpanel-Anzeige (Touchpanel) 9 eines Fahrzeugnavigationssystems, klimaanlagenbezogene Tasten 11 und dergleichen auf einer Mittelkonsole auf der linken Seite des Lenkrads 3 angeordnet.

Die Touch-Panel-Anzeige 9 zeigt eine Führungskarte und dergleichen der Autonavigation sowie Berührungstasten (Display-Tasten) 13 zur Eingabe verschiedener Einstellungen. Die Berührungstasten 13 sind Multifunktionstasten, mit denen eine zugeordnete Funktion im Berührungsbetrieb arbeitet und einer linken Bedieneinheit entspricht. Die Berührungstasten 13 umfassen beispielsweise eine Modusauswahltaste zur Auswahl einer Betriebsart, eine Zieleinstellungstaste zur Eingabe eines Ziels und dergleichen.

Mit den Berührungstasten 13 kann eine Anzeigeposition auf dem Touchscreen-Display 9 geändert oder zwischen Anzeige und Nichtanzeige gewechselt werden.

Die klimaanlagenbezogenen Tasten 11 als linke Bedieneinheit umfassen beispielsweise eine Taste zum Einstellen der Klimatemperatur, eine Taste zum Einstellen des Luftstroms, eine Taste zum Umschalten des Lüftungsmodus (Innenzirkulation/Außenlufteinlass) und dergleichen.

In der Ausführungsform sind die klimaanlagenbezogenen Tasten 11 ähnlich wie die Speichertasten 5 und die Bedientasten 7 durch die Beleuchtung ihrer Bedienflächen durch Einschalten einer integrierten Lichtquelle 111 optisch leicht zu erkennen (siehe FIG. 2).

Wie in FIG. 2 dargestellt, umfasst die Fahrzeug-Steuervorrichtung gemäß der Ausführungsform eine Steuerung 15. Die Steuerung 15 steuert die Beleuchtung und das Erlöschen der Beleuchtung der Bedienflächen der Speichertasten 5, der Bedientasten 7 und der klimaanlagenbezogenen Tasten 11 sowie die Anzeige und Nichtanzeige der BerührungsTasten 13 des Touchpanel-Displays 9.

Die Steuerung 15 ist an die Lichtquellen 51, 71, 111 angeschlossen, um die in den Speichertasten 5, den Bedientasten 7 und den klimaanlagenbezogenen Tasten 11 integrierten Bedienoberflächen über eine Signalleitung, wie beispielsweise ein Fahrzeug-LAN, zu beleuchten. Die Signalleitung wird z.B. auf der Rückseite einer Innenverkleidung des Fahrzeugs verlegt.

Die Steuerung 15 ist über die Signalleitung mit den Schaltern 53, 73, 113 zur Erkennung des Druckbetriebs der Speichertasten 5, der Bedientasten 7 und der klimaanlagenbezogenen Tasten 11 verbunden.

Die Steuerung 15 ist über die Signalleitung mit der Touchpanel-Anzeige 9 verbunden.

Die Steuerung 15 ist mit einem Rechte-Hand-Sensor 17 und einem Linke-Hand-Sensor 19 als Greifsensoren verbunden, um das Greifen des Lenkrads 3 durch die rechte und linke Hand des Fahrers über die Signalleitung zu erfassen.

Die Steuerung 15 ist über die Signalleitung mit einem Lenkwinkelsensor 21 zum Erfassen eines Lenkwinkels aus der Neutralstellung des Lenkrads 3 (ein Lenkwinkel des Lenkrads 3, bei dem das Fahrzeug gerade fährt) verbunden.

Die Steuerung 15 ist mit einem Geschwindigkeitssensor 23 verbunden, um über die Signalleitung einen Geschwindigkeitsimpuls einer Periode auszugeben, die einer Fahrgeschwindigkeit während der Fahrt des Fahrzeugs entspricht.

Wie in FIG. 1 dargestellt, weist der Rechte-Hand-Sensor 17 einen Erfassungsbereich einer im Wesentlichen rechten Hälfte (rechter Greifbereich) des Lenkrads 3 in der Neutralstellung auf, und der Linke-Hand-Sensor 19 weist einen Erfassungsbereich einer im Wesentlichen linken Hälfte (linker Greifbereich) des Lenkrads 3 in der Neutralstellung auf, der von der linken Hand erfasst werden soll. Der Rechte-Hand-Sensor 17 und der Linke-Hand-Sensor 19 können jeweils beispielsweise durch einen kapazitiven Sensor konfiguriert werden, bei dem sich der Elektrodenabstand durch Greifen des Lenkrads 3 ändert.

Der Lenkwinkelsensor 21 kann beispielsweise durch einen Schleifring konfiguriert werden, in dem ein Rotor am Lenkrad 3 und ein Stator an einer Lenkwelle befestigt ist (nicht dargestellt).

Wenn einer der Schalter 53, 73, 113 eine Betätigung der entsprechenden Speichertaste 5, der Bedientasten 7 oder der klimaanlagenbezogenen Taste 11 erkennt, bewirkt die Steuerung 15, dass die Betätigung einer Funktion, die der gedrückten Speichertaste 5, den Bedientasten 7 oder der klimaanlagenbezogenen Taste 11 entspricht, ausgeführt wird.

Wenn die Berührungsoperation einer der Berührungsschalter 13 über das Touchpanel des Berührungsbildschirms 9 erkannt wird, bewirkt die Steuerung 15, dass eine Funktion entsprechend der Berührungsschalter 13 ausgeführt wird, mit der die Berührungsoperation ausgeführt wird.

Wenn sich das Lenkrad 3 in einer Lenkwinkelposition der Neutralstellung oder in der Nähe der Neutralstellung befindet, führt die Steuerung 15 eine Beleuchtungssteuerung der Lichtquellen 51, 71, 111 und eine Anzeigesteuerung der Berührungstasten 13 in der Touchpanel-Anzeige 9 in Abhängigkeit von einem Erfassungszustand des Greifens des Lenkrads 3 durch den Rechte-Hand-Sensor 17 und den Linke-Hand-Sensor 19 durch.

Man beachte, dass die Lenkwinkelposition in der Nähe der Neutralstellung des Lenkrads 3 beispielsweise ein Bereich eines Lenkwinkels sein kann, in dem der Fahrer das Lenkrad 3 lenken kann, ohne den Griff der rechten oder linken Hand zu ändern (ein Lenkwinkel kleiner oder gleich einem vorgegebenen Wert). Somit ist eine Lenkwinkelposition zum Zeitpunkt des Lenkens des Lenkrads 3 durch Ändern des Greifens der rechten oder linken Hand, wie z.B. Rechts- oder Linksdrehung, Drehen oder dergleichen, wenigstens in der Nähe der Neutralposition des Lenkrads 3 nicht in den Bereich der Lenkwinkelposition einbezogen.

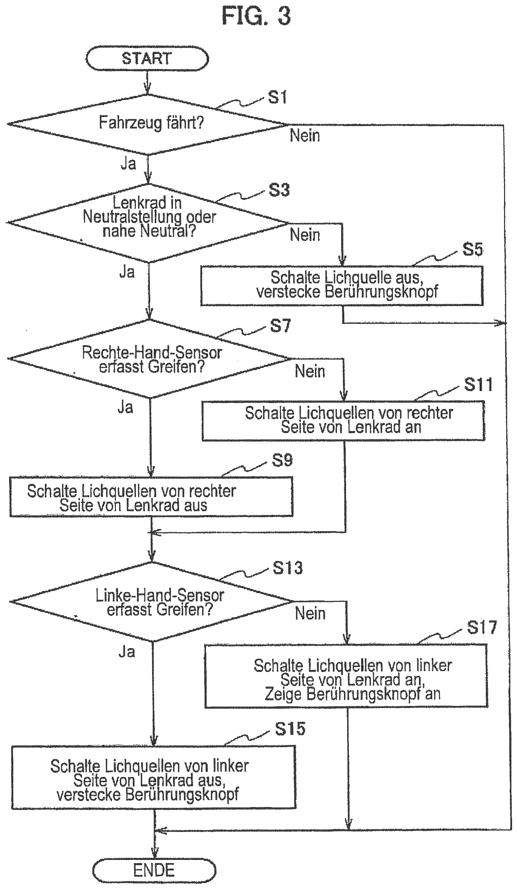

Anschließend wird unter Bezugnahme auf das Flussdiagramm von FIG. 3 ein Verfahren zur Lichtsteuerung der Lichtquellen 51, 71, 111 und zur Anzeigesteuerung der Berührungstasten 13 beschrieben, die von einer CPU der Steuerung 15 gemäß einem in einem ROM der Steuerung 15 gespeicherten Programm ausgeführt wird. Die CPU führt wiederholt die Steuerung des im Flussdiagramm von FIG. 3 dargestellten Verfahrens für jeden vorbestimmten Zeitraum durch.

Zunächst bestätigt die CPU, ob das Fahrzeug fährt oder nicht (Schritt S1). Die Tatsache, dass das Fahrzeug fährt, kann durch Eingabe des Geschwindigkeitsimpulses vom Geschwindigkeitssensor 23 bestätigt werden.

Wenn das Fahrzeug nicht fährt (NEIN in Schritt S1), wird eine Reihe von Verarbeitungsschritten beendet. Andererseits bestätigt die CPU, wenn das Fahrzeug fährt (JA in Schritt S1), ob sich das Lenkrad 3 in der Lenkwinkelposition der Neutralposition oder in der Nähe der Neutralposition befindet (Schritt S3).

Wenn sich das Lenkrad 3 nicht in der Lenkwinkelposition der Neutralstellung oder in der Nähe der Neutralstellung befindet (NEIN in Schritt S3), besteht die Möglichkeit, dass das Lenkrad 3 durch wechselndes Greifen der rechten oder linken Hand gesteuert wird.

In diesem Zustand ist der Greifzustand der rechten Hälfte des Lenkrads 3, der vom Rechte-Hand-Sensor 17 erfasst wird, nicht unbedingt der Greifzustand der rechten Hand des Fahrers, und der Greifzustand der linken Hälfte des Lenkrads 3, der vom Linke-Hand-Sensor 19 erfasst wird, ist nicht unbedingt der Greifzustand der linken Hand des Fahrers. Aus diesem Grund kann nicht für jede der rechten und linken Hände einzeln bestimmt werden, ob der Fahrer das Lenkrad 3 greift oder nicht.

Die CPU schaltet daher die Lichtquellen 51, 71, 111 aus und blendet die Berührungstasten 13 der Touch-Panel-Anzeige 9 (Schritt S5) aus und beendet dann die Reihe von Verarbeitungsschritten.

Befindet sich das Lenkrad 3 dagegen in der Lenkwinkelposition der Neutralstellung oder in der Nähe der Neutralstellung (JA in Schritt S3), kann davon ausgegangen werden, dass der vom Rechte-Hand-Sensor 17 erfasste Greifzustand der rechten Hälfte des Lenkrads 3 der Greifzustand der rechten Hand des Fahrers ist und der vom Linke-Hand-Sensor 19 erfasste Greifzustand der linken Hälfte des Lenkrads 3 der Greifzustand der linken Hand des Fahrers ist.

Die CPU bestätigt daher, ob der Rechte-Hand-Sensor 17 das Greifen der rechten Lenkradhälfte 3 erkennt oder nicht (Schritt S7). Wenn der Rechte-Hand-Sensor 17 das Greifen erkennt (JA in Schritt S7), schaltet die CPU die Lichtquellen 51, 71 der Speichertasten 5 und die auf der rechten Seite des Lenkrads 3 (Schritt S9) angeordneten Bedientasten 7 aus und fährt mit Schritt S13 fort.

Wenn der Rechte-Hand-Sensor 17 das Greifen nicht erkennt (NO in Schritt S7), schaltet die CPU die Lichtquellen 51, 71 der Speichertasten 5 und die Bedientasten 7 (Schritt S11) ein und fährt dann mit Schritt S13 fort.

In Schritt S13 bestätigt die CPU, ob der Linke-Hand-Sensor 19 das Greifen der linken Lenkradhälfte 3 erkennt oder nicht. Wenn der Linke-Hand-Sensor 19 das Greifen erkennt (JA in Schritt S13), verbirgt die CPU die auf der linken Seite des Lenkrads 3 angeordneten Berührungstasten 13 des Touchpanel-Displays 9 und schaltet die Lichtquelle 111 der klimaanlagenbezogenen Tasten 11 (Schritt S15) aus und beendet dann die Reihe der Verarbeitungsschritte.

Wenn der Linke-Hand-Sensor 19 das Greifen nicht erkennt (NEIN in Schritt S13), zeigt die CPU die Berührungstasten 13 auf dem Touchpanel-Display 9 an und schaltet die Lichtquelle 111 der klimaanlagenbezogenen Tasten 11 (Schritt S17) ein und beendet dann die Reihe der Verarbeitungsschritte.

In der Ausführungsform fungieren die Schritte S3, S7 und S13 des Flussdiagramms von FIG. 3, die von der CPU der Steuerung 15 ausgeführt werden, als eine Detektionseinheit.

In der Ausführungsform fungiert das von der CPU der Steuerung 15 ausgeführte Verfahren der Schritte S9 und S11 von FIG. 3 als rechte Steuereinheit und die von der CPU der Steuerung 15 ausgeführten Schritte S15 und S17 von FIG. 3 als linke Steuereinheit.

Weiterhin entsprechen in der Ausführungsform ein Ausschaltzustand der Lichtquellen 51, 71, 111 der Speichertasten 5, der Bedientasten 7 und der klimaanlagenbezogenen Tasten 11 sowie ein Nichtanzeigezustand der Bedientasten 13 des Touchpanel-Displays 9 in den Schritten S9 und S15 von FIG. 3, die von der CPU der Steuerung 15 ausgeführt werden, einem ersten Anzeigemodus.

Darüber hinaus entsprechen in der Ausführungsform ein Einschaltzustand der Lichtquellen 51, 71, 111 der Speichertasten 5, der Bedientasten 7 und der klimaanlagenbezogenen Tasten 11 sowie ein Anzeigezustand der Bedientasten 13 des Touchpanel-Displays 9 in den Schritten S11 und S17 von FIG.3, die von der CPU der Steuerung 15 ausgeführt werden, einem zweiten Anzeigemodus.

Wie vorstehend beschrieben, schaltet die Steuerung 15 in der Ausführungsform, wenn der Rechte-Hand-Sensor 17 das Greifen des Lenkrads 3 erkennt, wenn sich das Lenkrad 3 in der Lenkwinkelposition der Neutralstellung oder in der Nähe der Neutralstellung befindet, die Lichtquellen 51, 71 der Speichertasten 5 und der Bedientasten 7 aus.

Aus diesem Grund, wenn die rechte Hand des Fahrers irgendwo in der im Wesentlichen rechten Hälfte des Lenkrads 3 in der Lenkwinkelposition der Neutralstellung oder in der Nähe der Neutralstellung gebunden ist, werden die Bedienflächen der Speichertasten 5 und der auf der rechten Seite des Lenkrads 3 angeordneten Bedientasten 7 von den Lichtquellen 51 und 71 nicht beleuchtet und sind schwer optisch erkennbar.

Wenn der Linke-Hand-Sensor 19 in der Ausführungsform das Greifen des Lenkrads 3 erkennt, wenn sich das Lenkrad 3 in der Lenkwinkelposition der Neutralstellung oder in der Nähe der Neutralstellung befindet, schaltet die Steuerung 15 die Lichtquelle 111 der klimaanlagenbezogenen Tasten 11 aus und verbirgt die Berührungsknöpfe 13 des Touchpanel-Displays 9.

Aus diesem Grund, wenn die linke Hand des Fahrers irgendwo in der im Wesentlichen linken Hälfte des Lenkrads 3 in der Lenkwinkelposition der Neutralstellung oder in der Nähe der Neutralstellung gebunden ist, werden die Bedienflächen der auf der linken Seite des Lenkrads 3 angeordneten klimaanlagenbezogenen Tasten 11 von der Lichtquelle 111 nicht beleuchtet und sind schwer optisch zu erkennen. Darüber hinaus werden die Berührungstasten 13 nicht auf dem Touchpanel-Display 9 angezeigt, das auf der linken Seite des Lenkrads 3 angeordnet ist, und die Berührungsbedienung der Berührungstasten 13 kann nicht durchgeführt werden.

Wenn hingegen in der Ausführungsform der Rechte-Hand-Sensor 17 das Greifen des Lenkrads 3 nicht erkennt, wenn sich das Lenkrad 3 in der Lenkwinkelposition der Neutralstellung oder in der Nähe der Neutralstellung befindet, schaltet die Steuerung 15 die Lichtquellen 51, 71 der Speichertasten 5 und der Bedientasten 7 ein.

Aus diesem Grund, wenn die rechte Hand des Fahrers frei ist, ohne irgendwo in der im Wesentlichen rechten Hälfte des Lenkrads 3 in der Lenkwinkelposition der Neutralstellung oder in der Nähe der Neutralstellung zu greifen, werden die Bedienflächen der Speichertasten 5 und der auf der rechten Seite des Lenkrads 3 angeordneten Bedientasten 7 von den Lichtquellen 51, 71 beleuchtet und sind optisch leicht zu erkennen.

Wenn der Linke-Hand-Sensor 19 in der Ausführungsform das Greifen des Lenkrads 3 nicht erkennt, wenn sich das Lenkrad 3 in der Lenkwinkelposition der Neutralstellung oder in der Nähe der Neutralstellung befindet, schaltet die Steuerung 15 die Lichtquelle 111 der klimaanlagenbezogenen Tasten 11 ein und zeigt die Berührungsknöpfe 13 auf dem Touchpanel-Display 9 an.

Aus diesem Grund, wenn die linke Hand des Fahrers frei ist, ohne irgendwo in der im Wesentlichen linken Hälfte des Lenkrads 3 in der Lenkwinkelposition der Neutralstellung oder in der Nähe der Neutralstellung zu greifen, werden die Bedienflächen der klimarelevanten Tasten 11, die auf der linken Seite des Lenkrads 3 angeordnet sind, von der Lichtquelle 111 beleuchtet und sind optisch leicht zu erkennen. Darüber hinaus werden die Berührungstasten 13 auf dem Touchpanel-Display 9 angezeigt, das auf der linken Seite des Lenkrads 3 angeordnet ist, und die Berührungsbedienung kann für die Berührungstasten 13 durchgeführt werden.

Das heißt, wenn der Fahrer das Lenkrad 3 nicht mit der rechten Hand bedient, werden die Speichertasten 5 und die Bedientasten 7, die mit der rechten Hand leichter zu bedienen sind, in einem Anzeigemodus angezeigt, der in der Sichtbarkeit höher ist als ein Anzeigemodus, wenn der Fahrer das Lenkrad 3 mit der rechten Hand bedient. Wenn der Fahrer das Lenkrad 3 nicht mit der linken Hand bedient, werden außerdem die klimaanlagenbezogenen Tasten 11 und die Berührungsknöpfe 13 des Touchpanel-Displays 9, die mit der linken Hand leichter zu bedienen sind, im Anzeigemodus besser sichtbar angezeigt als im Anzeigemodus, wenn der Fahrer das Lenkrad 3 mit der linken Hand bedient.

Daher können die Anzeigemodi der vom Fahrer des Fahrzeugs für andere Zwecke als das Fahren betätigten Tasten (die Speichertasten 5, die Bedientasten 7, die klimarelevanten Tasten 11, die Berührungstasten 13) so gesteuert werden, dass es leicht zu unterscheiden ist zwischen einer Bedieneinheit, die vom Fahrer des Fahrzeugs mit einer Hand bedient werden kann, mit der die Bedienung einfacher ist, und einer Bedieneinheit, die dies nicht ist.

In der Ausführungsform wurde der Fall der Steuerung der Anzeigemodi der Speichertasten 5, der Bedientasten 7, der klimaanlagenbezogenen Tasten 11 und der Berührungstasten 13 beschrieben, die vom Fahrer mit der Hand bedient werden können, mit der die Bedienung leichter durchgeführt werden kann, abhängig von einem Erkennungsergebnis des Greifzustands des Lenkrads 3 durch die rechte oder linke Hand des Fahrers.

Ein Anzeigemodus kann jedoch von einer Bedieneinheit gesteuert werden, die vom Fahrer zu einem anderen Zweck als dem Fahren mit der Hand bedient werden kann, mit der die Bedienung leichter durchgeführt werden kann, abhängig von einem Betriebszustand einer vom Fahrer betriebenen Fahrbedieneinheit zum Antreiben des anderen Fahrzeugs als des Lenkrads 3, zum Beispiel eines Schalthebels und dergleichen.

Darüber hinaus wird in der Ausführungsform unter Berücksichtigung der mehrfachen Drehung des Lenkrads 3 im Falle einer Rechts- oder Linksdrehung, Drehung oder dergleichen, wenn das Lenkrad 3 über die Lenkwinkelposition der Neutralstellung oder die Nähe der Neutralstellung hinaus gesteuert wird, der Greifzustand des Lenkrads 3 durch die rechte Hand oder die linke Hand des Fahrers nicht basierend auf den Erfassungsergebnissen des Rechte-Hand-Sensors 17 und des Linke-Hand-Sensors 19 bestimmt.

In einem Fall, in dem die Fahrbetriebseinheit von dem Lenkrad 3 verschieden ist, kann jedoch eine Konfiguration weggelassen werden, die das Bestimmen des Greifzustands durch die rechte oder linke Hand des Fahrers in Abhängigkeit vom Lenkwinkel des Lenkrads 3 verhindert.

## Patentansprüche

1. Fahrzeuganzeige-Steuervorrichtung, umfassend:
eine Erfassungseinheit (15) zum Erfassen eines Betriebszustands durch einen Fahrer einer Fahrbetriebseinheit (3), die zum Fahren eines Fahrzeugs betrieben wird, einzeln für eine rechte und eine linke Hand des Fahrers;
eine rechte Steuereinheit (15), die in der Lage ist, eine rechte Bedieneinheit (5, 7) anzuzeigen, die mit der rechten Hand des Fahrers zu einem anderen Zweck als dem Fahren des Fahrzeugs in einem ersten Anzeigemodus betrieben wird, wenn sich der Betriebszustand durch die rechte Hand des von der Erfassungseinheit (15) erfassten Fahrers in einem Betriebszustand befindet, und die rechte Bedieneinheit (5, 7) in einem zweiten Anzeigemodus anzuzeigen, der für den Fahrer sichtbarer ist als der erste Anzeigemodus, wenn sich der Betriebszustand durch die rechte Hand des von der Erfassungseinheit (15) erfassten Fahrers in einem Nichtbetriebszustand befindet; **gekennzeichnet durch**
eine linke Steuereinheit (15), die in der Lage ist, eine linke Bedieneinheit (11, 13) anzuzeigen, die mit der linken Hand des Fahrers zu einem anderen Zweck als dem Fahren des Fahrzeugs in dem ersten Anzeigemodus betrieben wird, wenn sich der von der Erfassungseinheit (15) erfasste Betriebszustand durch die linke Hand des Fahrers in einem Betriebszustand befindet, und die linke Bedieneinheit (11, 13) in dem zweiten Anzeigemodus anzuzeigen, wenn sich der von der Erfassungseinheit (15) erfasste Betriebszustand durch die linke Hand des Fahrers in einem Nichtbetriebszustand befindet.

2. Fahrzeuganzeige-Steuervorrichtung nach Anspruch 1, wobei
die Erfassungseinheit (15) einen Greifsensor (17, 19) zum individuellen Erfassen eines Greifzustands durch den Fahrer eines Lenkrads (3) als Fahrbedieneinheit (3) zum Zeitpunkt des Nichtvorgangs einer Rechts- oder Linkskurve umfasst, bei dem ein Lenkwinkel kleiner oder gleich einem vorbestimmten Wert ist, durch Teilen des Greifzustands in einen Greifzustand eines rechten Greifbereichs durch die rechte Hand und einen Greifzustand eines linken Greifbereichs durch die linke Hand.

3. Fahrzeuganzeige-Steuervorrichtung nach Anspruch 1, wobei
sowohl die rechte Bedieneinheit (5, 7) und die linke Bedieneinheit (11, 13) eine Drucktaste (5, 7, 11, 13) umfasst, mit der der Fahrer Druckoperationen durchführt, und
jede der rechten Steuereinheiten (15) und der linken Steuereinheit (15) die Helligkeit der Beleuchtung durch eine Lichtquelle auf einer Bedienfläche der Drucktaste (5, 7, 11, 13) im zweiten Anzeigemodus stärker als im ersten Anzeigemodus macht.

4. Fahrzeuganzeige-Steuervorrichtung nach Anspruch 1, wobei
wenigstens eine Bedieneinheit der rechten Bedieneinheit (5, 7) und der linken Bedieneinheit (11, 13) eine Anzeigetaste (13) umfasst, die selektiv auf einem Touchpanel (9) angezeigt wird und mit der der Fahrer während der Anzeige eine Kontaktfunktion ausführt, und
eine Steuereinheit (15), die der wenigstens einen Bedieneinheit der rechten Steuereinheit (15) entspricht, und die linke Steuereinheit (15) zeigt die Anzeigetaste (13) auf dem Touchscreen (9) im ersten Anzeigemodus nicht an und zeigt die Anzeigetaste (13) auf dem Touchscreen (9) im zweiten Anzeigemodus an.

## Claims

1. A vehicle display control device, comprising:
a detection unit (15) for detecting an operation state by a driver of a driving operation unit operated for driving of a vehicle, individually for a right hand and a left hand of the driver;
a right hand side control unit (15) capable of displaying a right hand side operation unit (5,7) operated with the right hand of the driver for a purpose other than driving of the vehicle in a first display mode when the operation state by the right hand of the driver detected by the detection unit (15) is in an operating state, and displaying the right hand side operation unit (5, 7) in a second display mode higher in visibility by the driver than the first display mode when the operation state by the right hand of the driver detected by the detection unit is in a non-operating state, **characterized by**
a left hand side control unit (15) capable of displaying a left hand side operation unit (11, 13) operated with the left hand of the driver for a purpose other than driving of the vehicle in the first display mode when the operation state by the left hand of the driver detected by the detection unit (15) is in an operating state, and displaying the left hand side operation unit (11, 13) in the second display mode when the operation state by the left hand of the driver detected by the detection unit (15) is in a non-operating state.

2. The vehicle display control device according to claim 1, wherein
the detection unit (15) includes a grip sensor (17, 19) for individually detecting a gripping state by the driver of a steering wheel (3) as the driving operation unit (3) at the time of not making a right or left turn, at which a steering angle is less than or equal to a predetermined value, by dividing the gripping state into a gripping state of a right hand gripping range by the right hand and a gripping state of a left hand gripping range by the left hand.

3. The vehicle display control device according to claim 1, wherein
each of the right hand side operation unit (5, 7) and the left hand side operation unit (11, 13) includes a push button (5, 7, 11, 13) with which the driver performs pressing operation, and each of the right hand side control unit (15) and the left hand side control unit (15) makes brightness of illumination by a light source on an operation surface of the push button (5, 7, 11, 13) stronger in the second display mode than in the first display mode.

4. The vehicle display control device according to claim 1, wherein
at least one operation unit of the right hand side operation unit (5, 7) and the left hand side operation unit (11, 13) includes a display button (13) that is selectively displayed on a touch panel (9) and with which the driver performs a contact function during display, and
a control unit (15) corresponding to the at least one operation unit of the right hand side control unit (15), and the left hand side control unit (15) does not display the display button (13) on the touch panel (9) in the first display mode and displays the display button (13) on the touch panel (9) in the second display mode.

## Revendications

1. Dispositif de commande de l'affichage du véhicule comprenant:
une unité de détection (15) pour détecter un état de fonctionnement par un conducteur d'une unité de conduite (3) utilisée pour conduire un véhicule, une pour chacune des mains droite et gauche du conducteur;
une unité de commande de droite (15) capable d'afficher une unité de commande de droite (5, 7) actionnée avec la main droite du conducteur dans un but autre que la conduite du véhicule dans un premier mode d'affichage lorsque l'état de fonctionnement de la main droite du conducteur détecté par l'unité de détection (15) est dans un état de fonctionnement, et l'affichage de l'unité de commande de droite (5, 7) dans un second mode d'affichage plus visible pour le conducteur que le premier mode d'affichage lorsque l'état de fonctionnement est un état de non fonctionnement de la main droite du conducteur détecté par l'unité de détection (15);
**caractérisé par** une unité de commande de gauche (15) capable d'afficher une unité de commande de gauche (11, 13) actionnée de la main gauche du conducteur dans un but autre que la conduite du véhicule dans le premier mode d'affichage, lorsque l'état de fonctionnement détecté par l'unité de détection (15) est un état de fonctionnement de la main gauche du conducteur, et l'affichage de l'unité de fonctionnement gauche (11, 13) dans le second mode d'affichage lorsque l'état de fonctionnement détecté par l'unité de détection (15) est un état de non fonctionnement de la main gauche du conducteur.

2. Appareil de commande d'affichage de véhicule selon la revendication 1, dans lequel ladite unité de détection (15) comprend un capteur de préhension (17, 19) pour détecter individuellement un état de préhension par le conducteur d'un volant (3) en tant qu'unité de commande de conduite (3) au moment où il ne tourne pas à droite ou à gauche, dans lequel un angle de braquage est inférieur ou égal à une valeur prédéterminée, en divisant l'état de préhension en un état de préhension d'une zone de préhension de droite par la main droite et un état de préhension d'une zone de préhension de gauche par la main gauche.

3. Dispositif de commande d'affichage de véhicule selon la revendication 1, dans lequel
l'unité de commande de droite (5, 7) et l'unité de commande de gauche (11, 13) comportent toutes deux un bouton-poussoir (5, 7, 11, 13) avec lequel le conducteur effectue les opérations d'impression, et
l'unité de commande de droite (15) et l'unité de commande de gauche (15) rendent chacune la luminosité de l'éclairage par une source lumineuse sur une surface de commande du bouton-poussoir (5, 7, 11, 13) plus forte dans le second mode d'affichage que dans le premier.

4. Appareil de commande d'affichage de véhicule selon la revendication 1, dans lequel
au moins une unité de commande de l'unité de commande de droite (5, 7) et de l'unité de commande de gauche (11, 13) comprend une touche d'affichage (13) qui est affichée sélectivement sur un écran tactile (9) et avec laquelle le conducteur exécute une fonction de contact pendant l'affichage, et
une unité de commande (15) correspondant à la ou aux unités de commande de l'unité de commande de droite (15), et l'unité de commande de gauche (15) n'affiche pas la touche d'affichage (13) sur l'écran tactile (9) dans le premier mode d'affichage et affiche la touche d'affichage (13) sur l'écran tactile (9) dans le second mode d'affichage.
